# EUROPEAN PATENT APPLICATION

(11) **EP 4 796 294 A1**
(43) Date of publication of application: **26.08.2026**
(21) Application number: 26160741.0
(22) Date of filing: 25.02.2026
(51) Int. Cl.: B29C 65/02, B29C 65/06, B29C 65/08, B29C 65/36, B29K 101/12, B29K 105/06

(54) **METHODS FOR JOINING THERMOPLASTIC COMPOSITE STRUCTURES**

(30) Priority: 25.02.2025 US 202563762987 P
(71) Applicant: Rohr, Inc., Chula Vista, CA 91910-2098 (US)
(72) Inventor: RAO, Prabhakar M., Ellington, 06029 (US); KUMAR, Rajesh S., Ellington, 06029 (US); VAN TOOREN, Michael, San Diego, 92122 (US)
(74) Representative: Dehns

(57) **Abstract**

A method for joining thermoplastic components comprises providing a first component (22) comprising a first fibre-reinforced thermoplastic composite and a second component (24) comprising a second fibre-reinforced thermoplastic composite. The first and second components (22, 24) are arranged to form a welding zone (46). A discrete welding configuration forming a plurality of discrete welds (54) is selected and the first component (22) is welded to the second component (24) within the welding zone (46) using the selected discrete welding configuration.

The plurality of discrete welds (54) may serve as a damage arrestment feature by inhibiting crack formation and propagation in the joined first and second components (22, 24). Preferably, the joined first and second components (22, 24) form an aircraft structure (20).

## Description

### BACKGROUND

### 1. Technical Field

This disclosure relates generally to forming thermoplastic composite structures and, more particularly, to welding methods which enhance damage tolerance of welded thermoplastic composite components.

### 2. Background Information

Thermoplastic composite materials are increasingly being used in various aerospace, automotive and marine applications. Various methods are known in the art for welding thermoplastic composite material components together. While these known methods have various advantages, there is still room in the art for improvement. There is a need in the art therefore for a welding method which enhances damage tolerance of welded thermoplastic composite structures.

### SUMMARY OF THE DISCLOSURE

According to an aspect of the present disclosure, a method for joining thermoplastic components is provided. During the method, a first component and a second component are provided. The first component comprises a first fiber-reinforced thermoplastic composite, and the second component comprises a second fiber-reinforced thermoplastic composite. The second component is arranged with the first component to form a welding zone. A discrete welding configuration forming a plurality of discrete welds is selected. The first component is welded to the second component within the welding zone using the selected discrete welding configuration.

In any of the aspects and/or embodiments described above and herein, the plurality of discrete welds may be arranged within a portion of the welding zone as one or more longitudinally extending welded arrays.

In any of the aspects and/or embodiments described above and herein, a first longitudinally extending welded array may be offset from a second longitudinally extending welded array.

In any of the aspects and/or embodiments described above and herein, the plurality of discrete welds may be configured in a spot welded structure, a linear weld structure or a bidirectional segmented weld structure.

In any of the aspects and/or embodiments described above and herein, an inter-weld distance between neighboring pairs of discrete welds in the plurality of discrete welds may be uniform.

In any of the aspects and/or embodiments described above and herein, an inter-weld distance between neighboring pairs of discrete welds in the plurality of discrete welds may be non-uniform.

In any of the aspects and/or embodiments described above and herein, the welding the first component to the second component within the welding zone may further comprise continuously welding the first component to the second component along an outer portion of the welding zone to form a continuous weld region.

In any of the aspects and/or embodiments described above and herein, the continuous weld region may circumscribe a discrete weld region of the welding zone. The discrete weld region may include the plurality of discrete welds.

In any of the aspects and/or embodiments described above and herein, the plurality of discrete welds may be arranged within a portion of the welding zone as one or more welded line segments.

In any of the aspects and/or embodiments described above and herein, the plurality of discrete welds may extend laterally within the portion of the welding zone.

In any of the aspects and/or embodiments described above and herein, the plurality of discrete welds may extend longitudinally within the portion of the welding zone.

In any of the aspects and/or embodiments described above and herein, the plurality of discrete welds may extend within the portion of the welding zone at an included angle.

In any of the aspects and/or embodiments described above and herein, the included angle may be acute or obtuse

In any of the aspects and/or embodiments described above and herein, a first of the plurality of discrete welds may extend within the portion of the welding zone at a first angle and a second of the plurality of discrete welds may extend within the portion of the welding zone at a second angle. The first angle may be different than the second angle. The first angle may be acute, and the second angle may be obtuse.

In any of the aspects and/or embodiments described above and herein, the first fiber-reinforced thermoplastic composite may be configured with or otherwise include a fiber-reinforcement material comprising metal fibers, carbon fiber, insulating fibers, organic fibers, copper mesh and combinations thereof. The second fiber-reinforced thermoplastic composite may be configured with or otherwise include the fiber-reinforcement material.

In any of the aspects and/or embodiments described above and herein, the welding may comprise one of ultrasonic welding, vibration welding, induction welding or induction-conduction welding the first component to the second component using the plurality of discrete welds.

In any of the aspects and/or embodiments described above and herein, the method may further comprise forming an aircraft component. The aircraft component may comprise the first component and the second component. The aircraft component may include a welded section at an interface between the first component and the second component and an unwelded section at the interface between the first component and the second component.

According to an aspect of the present disclosure, a method for joining thermoplastic components for an aircraft is provided. During the method, a first component is arranged with a second component. The first component comprises a first fiber-reinforced thermoplastic composite, and the second component comprises a second fiber-reinforced thermoplastic composite. A discrete welding configuration to be formed with a welding zone located at an interface between the first component and the second component is determined. The selected discrete welding configuration is configured as a plurality of discrete welds. The first component is welded to the second component within the welding zone using the selected discrete welding configuration. An aircraft component is formed comprising the first component and the second component. The aircraft component includes a welded section at the interface between the first component and the second component and an unwelded section at the interface between the first component and the second component.

In any of the aspects and/or embodiments described above and herein, the plurality of discrete welds are configured in a spot welded structure, a linear weld structure or a bidirectional segmented weld structure.

According to an aspect of the present disclosure, a method for joining a thermoplastic component for an aircraft is provided. During the method, a first component is arranged with a second component to form a welding zone. The first component comprises a first fiber-reinforced thermoplastic composite, and the second component comprises a second fiber-reinforced thermoplastic composite. The welding zone includes a discrete weld region. A discrete welding configuration is selected and is configured as a plurality of discrete welds. The first component is welded to the second component using the selected discrete welding configuration at the discrete weld region. An aircraft component is formed comprising the first component and the second component. The aircraft component includes crack / damage arrestment features formed as a welded section and an unwelded section at an interface between the first component and the second component.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1A is a schematic illustration of a portion of a fiber-reinforced thermoplastic structure according to an embodiment of the present disclosure.
FIG. 1B is a schematic top view illustration of a portion of a fiber-reinforced thermoplastic polymer composite structure according to an embodiment of the present disclosure.
FIG. 2 is a partial sectional illustration of a structural component with a multi-layer configuration according to an embodiment of the present disclosure.
FIGS. 3A-D are schematic illustrations of a welding zone using discrete welding processes according to embodiments of the present disclosure.
FIGS. 4A-C are schematic illustrations of a welding zone using discrete welding processes according to embodiments of the present disclosure.
FIG. 5 is a schematic illustration of a welding zone using a discrete welding process according to an embodiment of the present disclosure.
FIG. 6 is a schematic top view illustration of a welding zone for a partial fiber-reinforced thermoplastic polymer composite structure according to an embodiment of the present disclosure.
FIG. 7 is a schematic top view illustration of a welding zone for a partial fiber-reinforced thermoplastic polymer composite structure according to an embodiment of the present disclosure.
FIG. 8 is a flow diagram of a method for manufacturing a welded fiber-reinforced thermoplastic polymer composite structure.
FIGS. 9A and 9B are schematic illustrations of a welding zone using discrete welding processes according to embodiments of the present disclosure.

### DETAILED DESCRIPTION

The present disclosure includes methods for welding, joining, repairing and/or otherwise manufacturing a thermoplastic aerospace component (e.g., a fiber-reinforced thermoplastic polymer composite component) of an aerospace vehicle such as an aircraft. The aircraft may be an airplane, a helicopter, a drone (e.g., an unmanned aerial vehicle (UAV)), or any other manned or unmanned aerial vehicle or system. The present disclosure, however, is not limited to aircraft applications. The aerospace vehicle, for example, may alternatively be a space shuttle, a missile or a rocket. It is contemplated, however, that the methods of the present disclosure may be used with automotive and marine applications as well. For ease of description herein, the present disclosure is generally described below as methods related to aerospace vehicle such as aircraft.

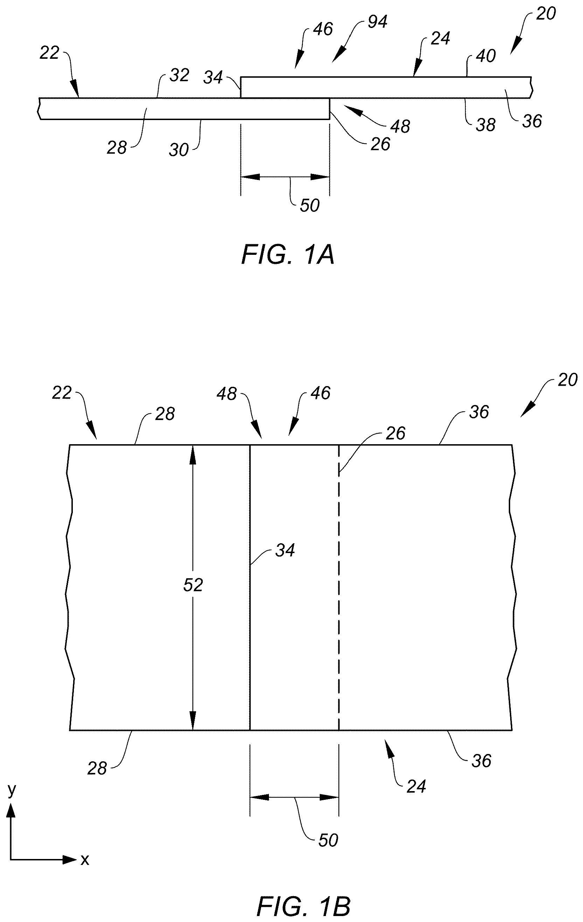

FIGS. 1A and 1B illustrate a portion of a fiber-reinforced thermoplastic polymer composite structure 20 for an aircraft. This structure 20 may be configured as part of a propulsion system for the aircraft. The structure 20, for example, may be configured as a component of a nacelle. Examples of the nacelle component include, but are not limited to, a fan cowl, an outer barrel, an inner barrel, an inlet lip skin and a translating sleeve. The structure 20 may alternatively be configured as a component of a fuselage or a wing of the aircraft. The structure 20 may still alternatively be configured as a component arranged within the aircraft fuselage; e.g., a component within a cabin of the aircraft. The present disclosure, however, is not limited to the foregoing exemplary aircraft structures. Furthermore, it is contemplated the structure 20 of the present disclosure may also be configured for non-aircraft applications. However, for ease of description, the structure 20 may be referred to and/or described below as an aircraft structure such as the nacelle structure.

The aircraft structure 20 of FIG. 1A and 1B includes a plurality of components including a first thermoplastic composite workpiece 22 and a second thermoplastic composite workpiece 24.

The first thermoplastic composite workpiece 22 of FIG. 1A and 1B extends longitudinally (e.g., along the x-axis) to longitudinal ends 26 of the first thermoplastic composite workpiece 22 (one end shown in FIGS. 1A-B). The first thermoplastic composite workpiece 22 extends laterally (e.g., along the y-axis) to lateral ends 28 of the first thermoplastic composite workpiece 22. The first thermoplastic composite workpiece 22 has a thickness that extends vertically between and to a first workpiece lower surface 30 and a first workpiece upper surface 32 of the first thermoplastic composite workpiece 22.

The second thermoplastic composite workpiece 24 of FIG. 1A and 1B extends longitudinally (e.g., along the x-axis) to longitudinal ends 34 of the second thermoplastic composite workpiece 24 (one end shown in FIGS. 1A-B). The second thermoplastic composite workpiece 24 extends laterally (e.g., along the y-axis) to lateral ends 36 of the second thermoplastic composite workpiece 22. The second thermoplastic composite workpiece 24 has a thickness that extends vertically between and to a second workpiece lower surface 38 and a second workpiece upper surface 40 of the second thermoplastic composite workpiece 24.

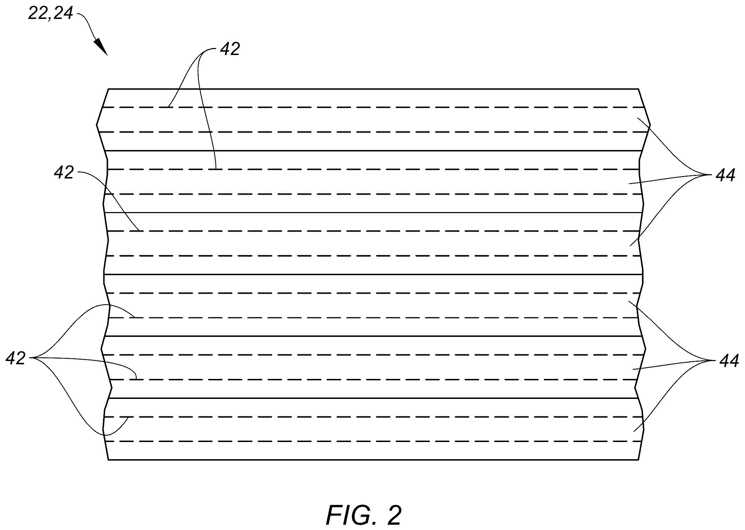

Referring to FIG. 2, the aircraft structural components 22 and 24 may be constructed from one or more layers of component material, where the component materials of the aircraft structural components 22 and 24 may be common component materials (e.g., the same component materials) or unique component materials (e.g., different component materials). Each component material may be a fiber-reinforced thermoplastic polymer composite. Fiber-reinforcement 42, for example, may be embedded within a thermoplastic material 44; e.g., a thermoplastic matrix. Examples of the fiber-reinforcement 42 include, but are not limited to, metal fibers (e.g., aluminum fibers, brass fibers, and stainless steel fibers), carbon fibers including graphite fibers (e.g., polyacrylonitrile (PAN)-based carbon fibers, rayon-based carbon fibers, lignin-based carbon fibers, and pitch-based carbon fibers), insulating fibers (e.g., glass fibers), organic fibers (e.g., aramid fibers, polyparaphenylene benzoxazole (PBO) fibers, polyphenylene sulfide fibers, polyester fibers, acrylic fibers, nylon fibers, and polyethylene fibers). Some or all of these fibers may be continuous fibers. Some or all of the fibers may also or alternatively be chopped fibers. The fiber-reinforcement forming the component material may be configured as woven fabric, non-woven fabric, extended films, functional films, etc. The present disclosure, however, is not limited to the foregoing exemplary fiber-reinforcement materials or fiber types. In some embodiments, the fiber-reinforcement 42 may be configured with or otherwise include a lightning strike protection material including, but not limited to, a copper mesh imbedded within the thermoplastic material 44.

Examples of the thermoplastic material 44 include, but are not limited to, a semicrystalline thermoplastic resin and an amorphous thermoplastic resin. Examples of the semicrystalline thermoplastic resin include, but are not limited to, polyester, polyolefin, polyoxymethylene (POM), polyamide (PA), polyarylene sulfide, polyketone (PK), polyetherketone (PEK), polyether ether ketone (PEEK), polyether ketone ketone (PEKK), polyvinylidene fluoride (PVDF), polytetrafluoroethylene (PTFE), polyaryletherketone (PAEK), polyether nitrile (PEN), fluororesin, and liquid crystal polymer (LCP). Examples of the polyester include, but are not limited to, polyethylene terephthalate (PET), polybutylene terephthalate (PBT), polytrimethylene terphthalate (PTT), polyethylene naphthalate (PEN), and liquid crystal polyester. Examples of the polyolefin include, but are not limited to, polyethylene (PE), polypropylene (PP), and polybutylene. An example of the polyarylene sulfide includes, but is not limited to, polyphenylene sulfide (PPS). An example of the fluororesin includes, but is not limited to, polytetrafluoroethylene (PTFE). Examples of the amorphous thermoplastic resin include, but are not limited to, polystyrene, polycarbonate (PC), polymethyl methacrylate (PMMA), polyvinyl chloride (PVC), polyphenylene ether (PPE), polyimide (PI), polyamide imide (PAI), polyetherimide (PEI), polysulfone (PSU), polyether sulfone (PES), and polyarylate (PAR). The present disclosure, however, is not limited to the foregoing exemplary thermoplastic materials.

Referring to FIGS. 1A and 1B, a portion of the second workpiece lower surface 38 is abutted against and contacts a portion of the first workpiece upper surface 32. The second workpiece lower surface 38, for example, may lay against (e.g., rest on, be disposed in contact with, etc.) the first workpiece upper surface 32. While the surfaces 32, 38 are shown with straight-line sectional geometries in the plane of FIGS. 1A and 1B, it is contemplated the surfaces may alternatively have non-straight-line (e.g., curved, compound, etc.) sectional geometries in the plane of FIGS. 1A and 1B. For example, the surfaces 32, 38 may be flat, planar surfaces, two-dimensional (2D) curved or otherwise non-flat surfaces, or three-dimensional (3D) curved or otherwise non-flat surfaces.

The second thermoplastic composite workpiece 24 is welded to the first thermoplastic composite workpiece 22 at / within a welding zone 46 such that the second thermoplastic composite workpiece 24 is welded to the first thermoplastic composite workpiece 22 at an interface 48 between the second thermoplastic composite workpiece 24 and the first thermoplastic composite workpiece 22. The welding zone 46 has a length 50 extending longitudinally (e.g., along the x-axis) between and to the longitudinal end 26 of the first thermoplastic composite workpiece 22 and the longitudinal end 34 of the second thermoplastic composite workpiece 24. The welding zone 46 has a width 52 extending laterally (e.g., along the y-axis) between and to the lateral ends 28, 36 of the first and second workpieces 22, 24.

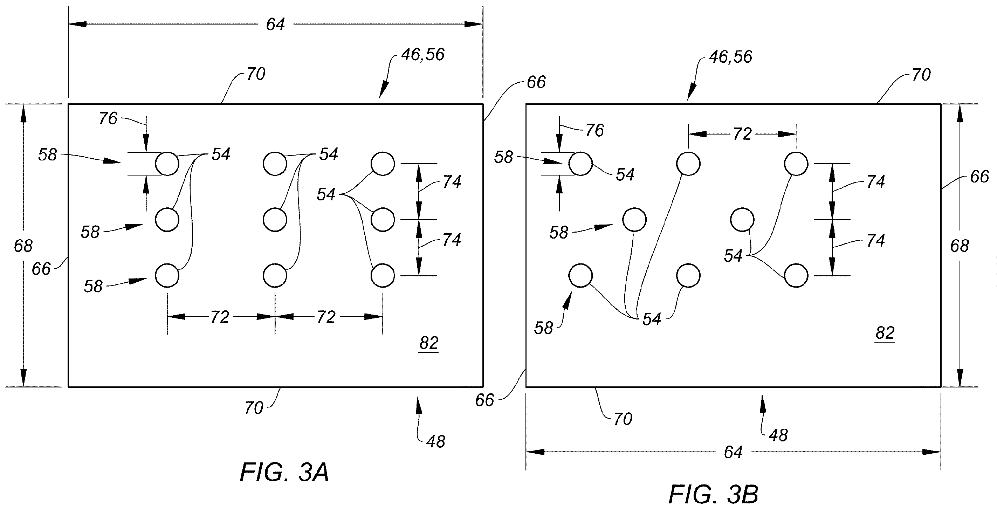

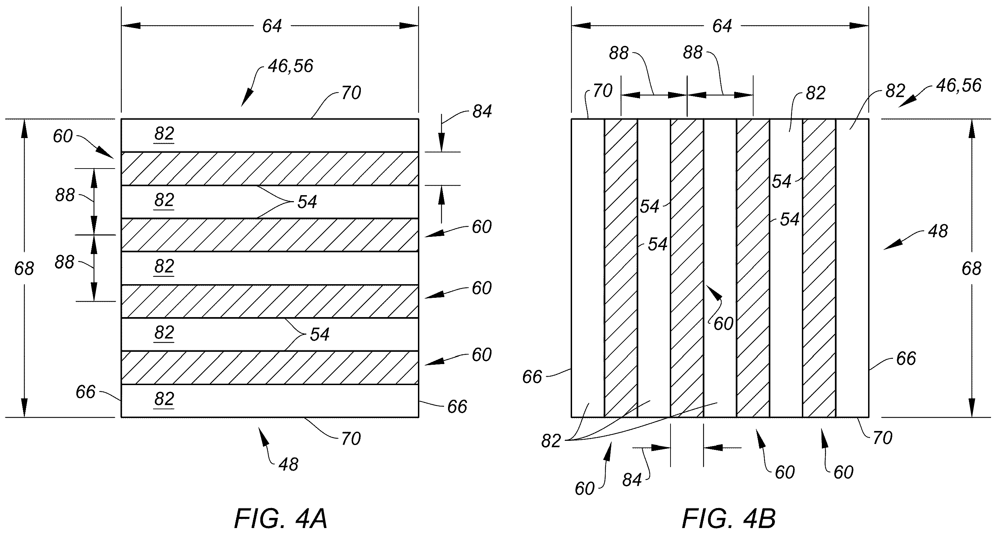

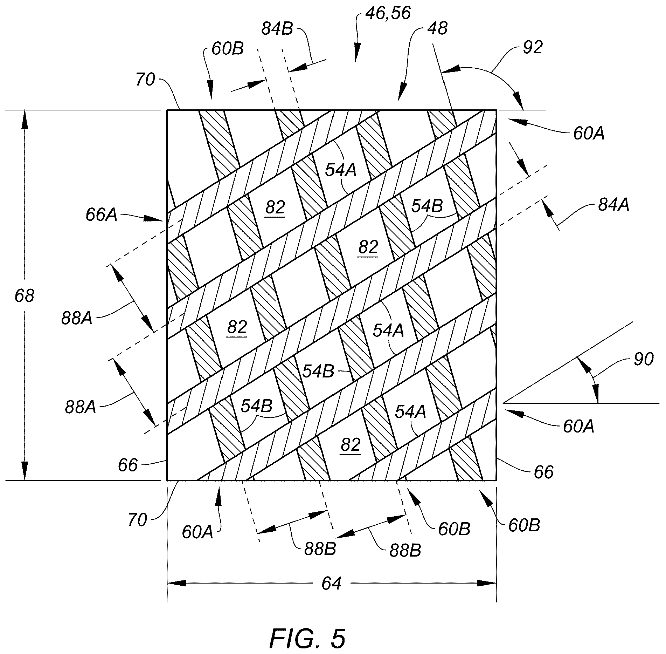

Referring to FIGS. 3A-C, 4A-C and 5-7, the welding zone 46 of the present disclosure includes a plurality of discrete welds 54 arranged within a discrete weld region 56 of the welding zone 46. The discrete weld region 56 may be configured as a portion of the welding zone 46 in which the second thermoplastic composite workpiece 24 is welded to the first thermoplastic composite workpiece 22 using the plurality of discrete welds 54 (described in further detail below). The discrete welds 54 may be arranged within the discrete weld region 56 in one or more longitudinally extending welded arrays 58 (see e.g., FIGS. 3A-D). In some embodiments, the discrete welds 54 may be arranged within the discrete weld region 56 as one or more welded line segments 60 (see e.g., FIGS. 4A-C and 5).

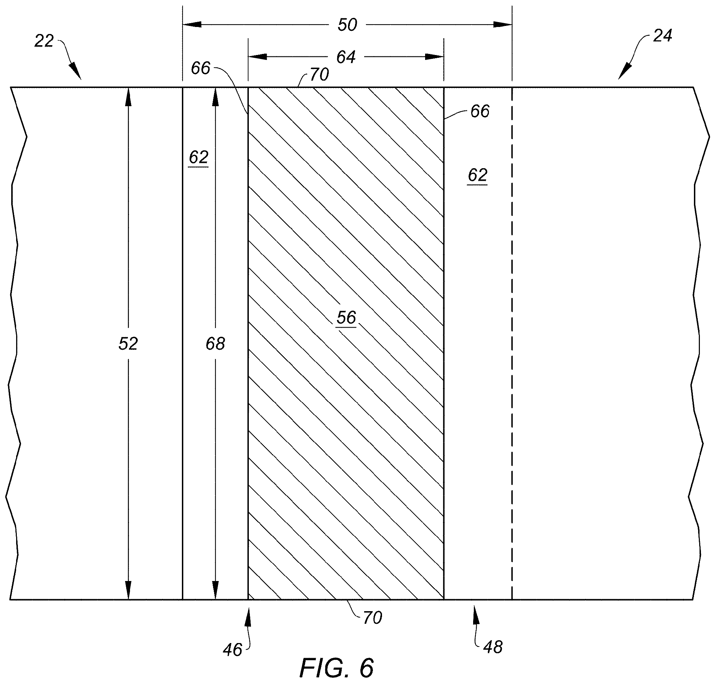

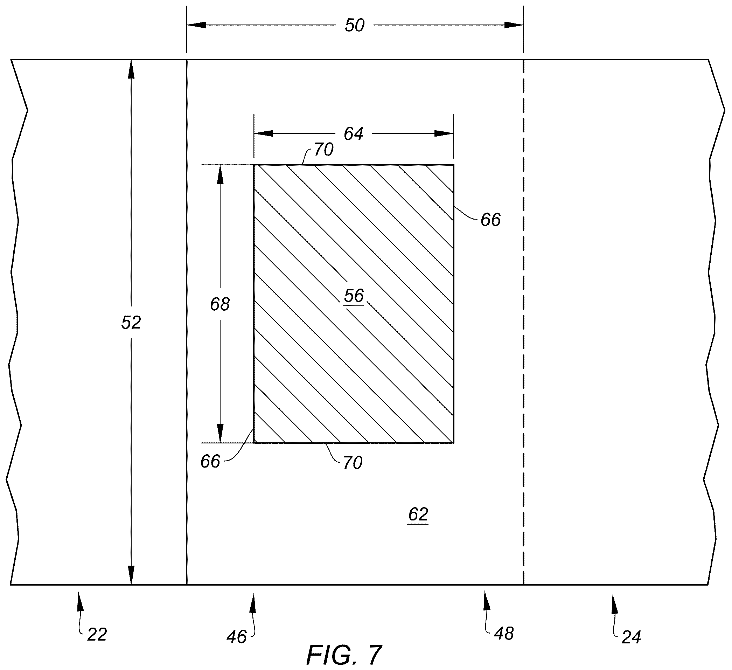

In some embodiments, referring to FIGS. 6 and 7, the welding zone 46 may be configured with or otherwise include the discrete weld region 56 and a continuous weld region 62. The continuous weld region 62, for example, is configured as or otherwise includes an outer portion of the welding zone 46 in which the second thermoplastic composite workpiece 24 is continuously welded (e.g., complete / near complete welding) to the first thermoplastic composite workpiece 22 at / along the interface 48.

The discrete weld region 56 of FIGS. 6 and 7 has a length 64 extending between lateral ends 66 of the discrete weld region 56. The discrete weld region 56 has a width 68 extending between longitudinal ends 70 of the discrete weld region 56. The length 64 of the discrete weld region 56 may be equal to or less than the length 50 of the welding zone 46. The width 68 of the discrete weld region 56 may be equal to or less than the width 52 of the welding zone 46. The continuous weld region 62 of FIGS. 6 and 7 may circumscribe the discrete weld region 56 along one or more ends 66, 70 of the discrete weld region 56. For example, the continuous weld region 62 may circumscribe lateral ends 66 of the discrete weld region 56 (see FIG. 6) or may circumscribe lateral ends 66 and longitudinal ends 70 of the discrete weld region 56 (see FIG. 7).

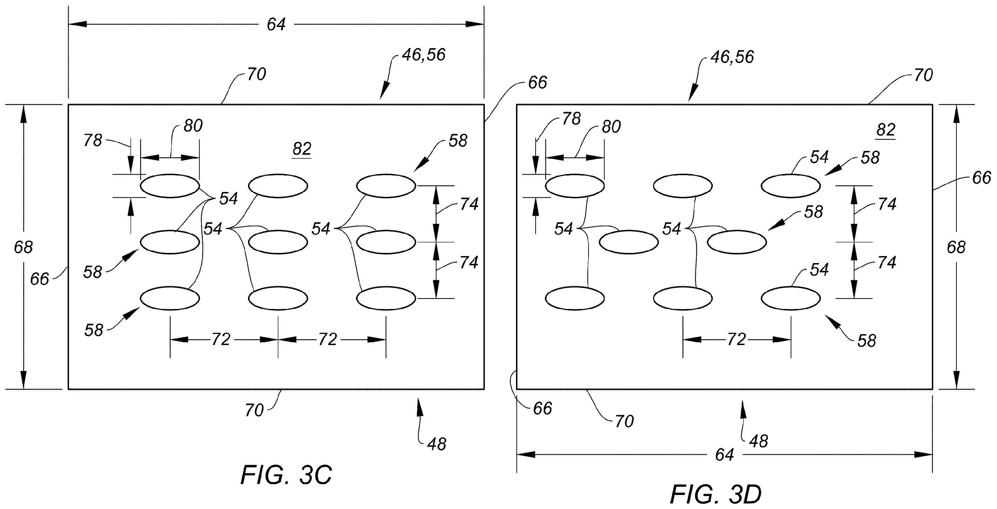

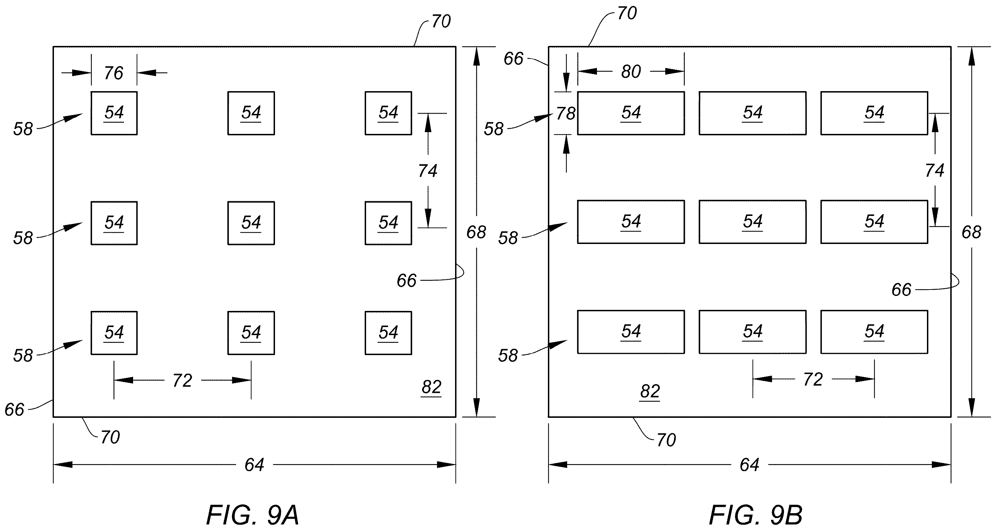

In some embodiments, referring to FIGS. 3A-D, the discrete weld region 56 includes the plurality of discrete welds 54 configured in a spot welded structure. The discrete welds 54 of FIGS. 3A-D may be formed as circular welds (see e.g., FIGS. 3A and 3B), oval welds (see e.g., FIGS. 3C and 3D) or combinations thereof. In some embodiments, the discrete welds 54 may be formed as rectangular and/or square welds (see e.g., FIGS. 9A and 9B). It is contemplated, however, that the discrete welds 54 of the present disclosure may be formed in any shape, size, or configuration necessary to weld the second thermoplastic composite workpiece 24 to the first thermoplastic composite workpiece 22.

The discrete welds 54 of FIGS. 3A-D are arranged into one or more longitudinally extending welded arrays 58. Inter-weld longitudinal distances 72 between longitudinally neighboring (e.g., adjacent) discrete welds 54 in each welded array 58 may be uniform (e.g., constant) or may vary (e.g., non-uniform). Inter-weld lateral distances 74 between laterally neighboring (e.g., adjacent) welded arrays 58 may be uniform (e.g., constant) or may vary (e.g., non-uniform). Similarly, distribution of the discrete welds 54 between laterally neighboring (e.g., adjacent) welded arrays 58 may be uniform (see e.g., FIGS. 3A and 3C), or may be offset (see e.g., FIGS. 3B and 3D). Other configurations and spacings of the discrete welds 54 are not meant to be precluded.

Referring to FIGS. 3A and 3B, each discrete weld 54 includes a diameter 76 extending within a portion of the welding zone 46 and its discrete weld region 56. Referring to FIGS. 3C and 3D, each discrete weld 54 includes a first dimension 78 (e.g., width) and a second dimension 80 (e.g., length) extending within a portion of the discrete weld region 56. The size and shape of the discrete welds 54 of FIGS. 3A-D may be constant (e.g., uniform) or may vary. The discrete weld region 56 of FIGS. 3A-D may thereby include welded sections in which the first and second workpieces 22, 24 are welded (e.g., joined) together along the interface (e.g., at each of the discrete welds 54), and may include unwelded sections 82 in which the first and second workpieces 22, 24 abut (e.g., contact) only. The second thermoplastic composite workpiece 24 may thereby be welded to the first thermoplastic composite workpiece 22 at least (or only) at each discrete weld 54 to form the aircraft structure 20.

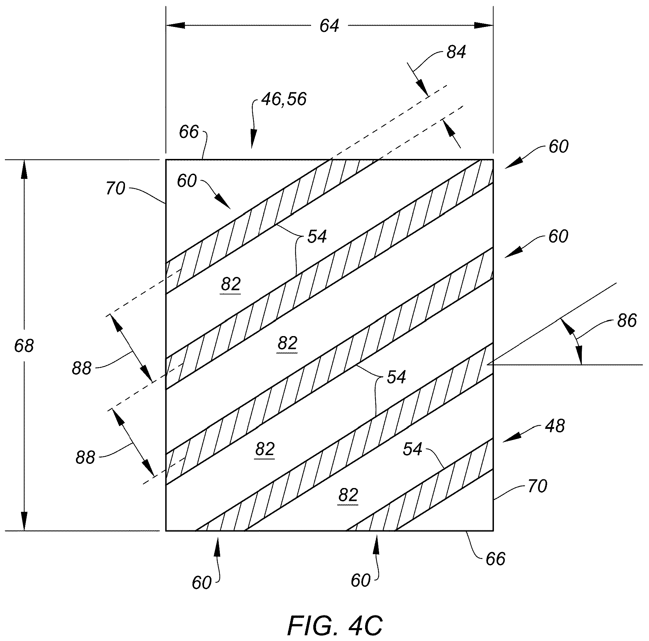

In some embodiments, referring to FIGS. 4A-C, the discrete weld region 56 includes the plurality of discrete welds 54 configured in a linear weld structure. The discrete welds 54 of FIGS. 4A-C are arranged within the discrete weld region 56 and include a weld thickness 84 extending within a portion of the discrete weld region 56. In some embodiments, referring to FIG. 4A, the discrete welds 54 are arranged as longitudinally extending welded line segments 60 extending along the length 64 (e.g., between lateral ends 66) of the discrete weld region 56 (see FIG. 4A). In some embodiments, referring to FIG. 4B, the discrete welds 54 are arranged as laterally extending welded line segments 60 extending along the width 68 (e.g., between longitudinal ends 70) of the discrete weld region 56 (see FIG. 4B). Still, in other embodiments, the discrete welds 54 may be arranged as longitudinally offset welded line segments 60 extending within the discrete weld region 56 at an included (e.g., acute) angle 86 (see FIG. 4C). It is contemplated, however, that the discrete welds 54 may include one or more of the configurations shown in FIGS. 4A-C.

Referring to FIGS. 4A-C, inter-weld distances 88 between neighboring (e.g., adjacent) discrete welds 54 in each array may be uniform (e.g., constant) or may vary. Similarly, the weld thickness 84 of the discrete welds 54 may be uniform (e.g., constant) or may vary. The discrete weld region 56 of FIGS. 4A-C may thereby include welded sections in which the first and second workpieces 22, 24 are welded (e.g., joined) together along the interface 48, and may include unwelded sections 82 in which the first and second workpieces 22, 24 abut (e.g., contact) only. The second thermoplastic composite workpiece 24 may thereby be welded to the first thermoplastic composite workpiece 22 at least (or only) at each discrete weld 54 to form the aircraft structure 20.

In some embodiments, referring to FIG. 5, the discrete weld region 56 includes the plurality of discrete welds 54A and 54B configured in a lattice patterned weld structure (e.g., a bidirectional segmented weld structure). A first of the plurality of discrete welds 54A are arranged as longitudinally offset welded line segments 60A extending within the discrete weld region 56. Each of the longitudinally offset welded line segments 60A may be offset from the longitudinal ends 66 of the discrete weld region 56 at a first angle 90. The first angle 90, for example, may be configured as an acute angle. A second of the plurality of discrete welds 54B are arranged into one or more laterally offset welded line segments 60B extending within the discrete weld region 54. Each of the laterally offset welded line segments 60B may be offset from the longitudinal ends 66 of the discrete weld region 56 at a second angle 92. The second angle 92 is different than the first angle 90. The second angle 92 of FIG. 5, for example, is configured as an obtuse angle. Other configurations of the first and second angles 90, 92 are not meant to be precluded.

Inter-weld distances 88A between neighboring discrete welds in the first of the plurality of discrete welds 54A may be uniform (e.g., constant) or may vary. Inter-weld distances 88B between neighboring discrete welds in the second of the plurality of discrete welds 54B may be uniform (e.g., constant) or may vary. Each first of the plurality of discrete welds 54A includes a first weld thickness 84A and each second of the plurality of discrete welds 54B includes a second weld thickness 84B. The first weld thickness 84A, the second weld thickness 84B or both may be uniform (e.g., constant) or may vary. The discrete weld region 56 of FIG. 5 may thereby include welded sections in which the first and second workpieces 22, 24 are welded (e.g., joined) together along the interface 48, and may include unwelded sections 82 in which the first and second workpieces 22, 24 abut (e.g., contact) only. The second thermoplastic composite workpiece 24 may thereby be welded to the first thermoplastic composite workpiece 22 at least (or only) at each discrete weld 54A, 54B to form the aircraft structure 20.

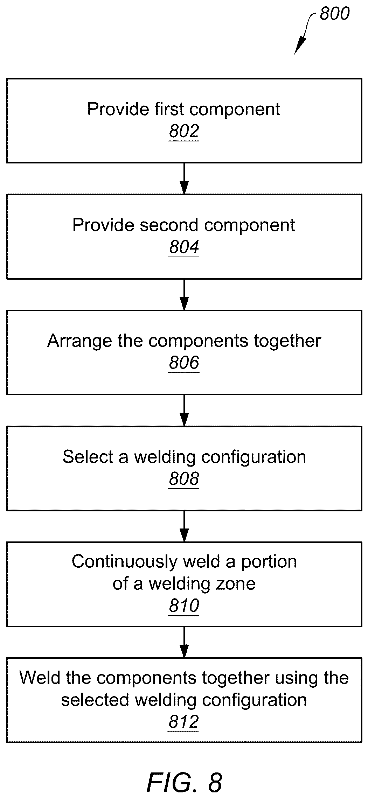

FIG. 8 is a flow diagram of a method 800 for welding a thermoplastic component; e.g., a thermoplastic composite component. For ease of description, the welding method 800 is described below with reference to the aircraft component 20 of FIGS. 1A and 1B. The present disclosure, however, is not limited to welding such an exemplary component.

In step 802, a first component of the aircraft structure 20 is provided. The first thermoplastic composite workpiece 22, for example, may be stamp formed, compression molded, injection molded, over-molded and laminated and/or otherwise manufactured as the first component.

In step 804, a second component of the aircraft structure 20 is provided. The second thermoplastic composite workpiece 24, for example, may be stamp formed, compression molded, injection molded, over-molded and laminated and/or otherwise manufactured as the second component.

In step 806, the second component is arranged with the first component for welding. For example, the second thermoplastic composite workpiece 24 is disposed on the first thermoplastic composite workpiece 22. Referring to FIG. 1A, the second workpiece lower surface 38 is abutted against and contacts the first workpiece upper surface 32. The second workpiece lower surface 38, for example, may lay against (e.g., rest on, be disposed in contact with, etc.) the first workpiece upper surface 32. Here, the (still discrete, non-welded) thermoplastic composite bodies 22 and 24 are arranged in a stack 94, and may be arranged on / over a support structure (not shown). The second component may be (e.g., temporarily) secured to the first component, or the second component may simply rest against (e.g., unsecured to) the first component.

In step 808, referring to FIGS. 3A-D, 4A-4C, 5, 9A and 9B, a discrete welding configuration is selected. The discrete welding configuration may be selected based on, for example, a material construction of the first thermoplastic composite workpiece 22 and/or the second thermoplastic composite workpiece 24. The discrete welding configuration may be selected using one or more of a plurality of different welding configurations. Each welding configuration comprises a plurality of discrete welds 54 that are formed within the welding zone 46 and the discrete welding region 56 (see e.g., FIGS. 3A-5). The discrete welding configuration may be selected, for example, to prevent crack formation between the first component and the second component during / after welding configuration. The selected discrete welding configuration may thereby be configured to provide a welded composite structure with crack / damage arrestment features, thereby enhancing damage tolerance of the aircraft structure 20. The particular welding configuration and its various associated parameters (e.g., spacing, thickness, orientation, etc.) may be selected (e.g., optimized) based on, for example, detailed fracture analysis of the aircraft structure 20 subject to applied loads using analytical or finite element analysis. The selected discrete welding configuration may thereby be configured to provide a welded composite structure which inhibits the formation and growth of cracks at /around the welding zone and prevents failure of the welded composite structure.

Optionally, in step 810, the second component is continuously welded to the first component. Referring to FIGS. 6 and 7, the second component may be continuously welded to the first component at / within the continuous welding region 62 of the welding zone 46.

In step 812, the second component is discretely welded to the first component. The second thermoplastic composite workpiece 24 of FIG. 1A and 1B, for example, is welded to the first thermoplastic composite workpiece 22 at / along the interface 48 using the selected discrete welding configuration. The second thermoplastic composite workpiece 22, for example, is welded to the first thermoplastic composite workpiece 22 at / within the portion of the welding zone 46 forming the discrete weld region 56 using the plurality of discrete welds 54. The structural elements 22, 24 may be welded together using ultrasonic welding, vibration welding, induction welding, induction-conduction welding and/or any other suitable (e.g., thermoplastic) welding process.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the phrase "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A method for joining thermoplastic components, comprising:
providing a first component (22) comprising a first fiber-reinforced thermoplastic composite;
providing a second component (24) comprising a second fiber-reinforced thermoplastic composite;
arranging the second component (24) with the first component (22) to form a welding zone (46);
selecting a discrete welding configuration forming a plurality of discrete welds; and
welding the first component (22) to the second component (24) within the welding zone (46) using the selected discrete welding configuration.

2. The method of claim 1, wherein the plurality of discrete welds are arranged within a portion of the welding zone (46) as one or more longitudinally extending welded arrays, and optionally wherein a first longitudinally extending welded array is offset from a second longitudinally extending welded array.

3. The method of claim 1, wherein the plurality of discrete welds are configured in a spot welded structure, a linear weld structure or a bidirectional segmented weld structure; or
wherein an inter-weld distance between neighboring pairs of discrete welds in the plurality of discrete welds is uniform.

4. The method of claim 1, wherein an inter-weld distance between neighboring pairs of discrete welds in the plurality of discrete welds is non-uniform.

5. The method of any preceding claim, wherein the welding the first component (22) to the second component (24) within the welding zone (46) further comprises:
continuously welding the first component (22) to the second component (24) along an outer portion of the welding zone (46) to form a continuous weld region, and optionally wherein
the continuous weld region circumscribes a discrete weld region of the welding zone (46); and
the discrete weld region includes the plurality of discrete welds.

6. The method of any preceding claim, wherein the plurality of discrete welds are arranged within a portion of the welding zone (46) as one or more welded line segments.

7. The method of claim 6, wherein the plurality of discrete welds extend laterally within the portion of the welding zone (46); and/or
wherein the plurality of discrete welds extend longitudinally within the portion of the welding zone (46); and/or

8. The method of claim 6, wherein the plurality of discrete welds extend within the portion of the welding zone (46) at an included angle, and optionally wherein the included angle is acute or obtuse.

9. The method of claim 6, wherein
a first of the plurality of discrete welds extends within the portion of the welding zone (46) at a first angle;
a second of the plurality of discrete welds extends within the portion of the welding zone (46) at a second angle; and
the first angle is different than the second angle.

10. The method of any preceding claim, wherein
the first fiber-reinforced thermoplastic composite includes a fiber-reinforcement material comprising metal fibers, carbon fiber, insulating fibers, organic fibers, copper mesh and combinations thereof; or
the second fiber-reinforced thermoplastic composite includes the fiber-reinforcement material.

11. The method of any preceding claim, wherein the welding comprises one of ultrasonic welding, vibration welding, induction welding or induction-conduction welding the first component (22) to the second component (24) using the plurality of discrete welds.

12. The method of any preceding claim, further comprising:
forming an aircraft component;
the aircraft component comprising the first component (22) and the second component (24), the aircraft component including a welded section at an interface between the first component (22) and the second component (24) and an unwelded section at the interface between the first component (22) and the second component (24).

13. A method for joining thermoplastic components for an aircraft, comprising:
arranging a first component (22) with a second component (24), the first component (22) comprising a first fiber-reinforced thermoplastic composite, the second component (24) comprising a second fiber-reinforced thermoplastic composite;
determining a discrete welding configuration to be formed with a welding zone (46) located at an interface between the first component (22) and the second component (24), the selected welding configuration forming a plurality of discrete welds; and
welding the first component (22) to the second component (24) within the welding zone (46) using the selected discrete welding configuration; and
forming an aircraft component comprising the first component (22) and the second component (24), the aircraft component including a welded section at the interface between the first component (22) and the second component (24) and an unwelded section at the interface between the first component (22) and the second component (24).

14. The method of claim 13, wherein the plurality of discrete welds are configured in a spot welded structure, a linear weld structure or a bidirectional segmented weld structure.

15. A method for joining a thermoplastic component for an aircraft, comprising:
arranging a first component (22) with a second component (24) to form a welding zone (46), the first component (22) comprising a first fiber-reinforced thermoplastic composite, the second component (24) comprising a second fiber-reinforced thermoplastic composite, and the welding zone (46) including a discrete weld region;
selecting a discrete welding configuration, the selected discrete welding configuration forming a plurality of discrete welds;
welding the first component (22) to the second component (24) using the selected discrete welding configuration at the discrete weld region; and
forming an aircraft component comprising the first component (22) and the second component (24), the aircraft component including crack / damage arrestment features formed as a welded section and an unwelded section at an interface between the first component (22) and the second component (24).
